(19) Europäisches Patentamt
European Patent Office
Office européen des brevets

(11) **EP 1 079 322 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
*G06K 7/00* (2006.01)          *G06K 17/00* (2006.01)
*G06K 19/07* (2006.01)          *G06K 7/10* (2006.01)

(21) Anmeldenummer: **00115321.2**

(22) Anmeldetag: **14.07.2000**

(54) **Verfahren und Vorrichtung zum Identifizieren und zur Positionsbestimmung von Objekten**

Method and apparatus for identification and position determination of objects

Méthode et dispositif d'identification et de détermination de position des objets

(84) Benannte Vertragsstaaten:
**AT BE CH CY DE DK ES FI FR GB GR IE IT LI LU MC NL PT SE**

(30) Priorität: **25.08.1999 DE 19940403**

(43) Veröffentlichungstag der Anmeldung:
**28.02.2001 Patentblatt 2001/09**

(73) Patentinhaber: **SICK AG**
**79183 Waldkirch,**
**Breisgau (DE)**

(72) Erfinder:
• **Pierenkemper, Hans-Werner**
**79312 Emmendingen (DE)**

• **Kilian, Reinhold**
**79183 Waldkirch (DE)**
• **Reinbach, Jürgen**
**79312 Emmendingen (DE)**

(74) Vertreter: **Manitz, Finsterwald & Partner GbR**
**Postfach 31 02 20**
**80102 München (DE)**

(56) Entgegenhaltungen:
**WO-A-99/05660          DE-U- 29 800 833**
**FR-A- 2 648 592**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Es wird ein Verfahren zum Identifizieren und zur Positionsbestimmung von Objekten beschrieben, bei dem zumindest ein an dem jeweiligen Objekt vorgesehener Transponder zum Abstrahlen von in dem Transponder gespeicherten, das jeweilige Objekt kennzeichnenden Transponder-Daten angeregt wird und die abgestrahlten Transponder-Daten erfaßt werden. Weiterhin ist die Erfindung auf eine Vorrichtung zur Durchführung dieses Verfahrens gerichtet.

Transponder, die in entsprechenden Verfahren und Vorrichtungen eingesetzt werden, werden auch als RFID-Transponder (Radio-Frequency-Identification-Transponder) bezeichnet, da in dem Transponder üblicherweise eine großflächige Spule sowie eine Kapazität vorhanden sind, wobei die Spule über ein hochfrequentes Magnetfeld, das über eine eine Antenne bildende Spule eines RFID-Lesegerätes ausgesandt wird, angeregt wird. Dadurch wird eine Spannung in der Spule des Transponders erzeugt, die als Spannungsversorgung des Transponders wirkt.

Der Transponder enthält üblicherweise einen Mikroprozessor, der auf diese Weise mit Spannung versorgt wird und in dem Transponder gespeicherte Transponder-Daten durch Steuerung des Stroms in der Spule des Transponders mittels eines entsprechenden Magnetfeldes abstrahlt. Dieses geänderte Magnetfeld bewirkt eine Änderung des Stroms bzw. der Spannung in der Spule des Lesegerätes, so daß die abgestrahlten Transponder-Daten von dem Lesegerät erfaßt werden.

Die Verwendung derartiger Transponder bringt einige Vorteile mit sich. Zum einen sind verhältnismäßig viele Daten in einem Transponder speicherbar, so daß der entsprechende Informationsgehalt sehr hoch ist. Weiterhin existieren neben Read-Only-Transpondern auch wiederbeschreibbare Transponder, so daß, falls erforderlich, die enthaltenen Daten geändert oder ergänzt werden können. Ein weiterer Vorteil besteht darin, daß die optische Strecke zwischen dem Lesegerät und dem Objekt nicht frei sein muß, da die Lesung durch induktive Kopplung erfolgt, und daß aus dem gleichen Grund eine entsprechende Vorrichtung unempfindlich gegen Verschmutzung ist.

Neben diesen Vorteilen existieren jedoch auch folgende Nachteile. Besonders problematisch ist es, daß eine exakte Positionsbestimmung eines Transponders nicht möglich ist. Dies ist insbesondere dann problematisch, wenn Objekte erkannt werden sollen, die sehr dicht aufeinanderfolgen. Insbesondere wenn sich mehrere Objekte gleichzeitig im Lesefeld eines Lesegeräts aufhalten, ist eine eindeutige Positionsbestimmung eines Transponders und damit des den Transponder tragenden Objekts nicht möglich.

Ein weiterer Nachteil besteht darin, daß eine Lesung oftmals nicht möglich ist, wenn sich der Transponder in der Nähe von metallischen Gegenständen, beispielsweise eines Alukoffers, befindet. Problematisch ist auch die noch relativ geringe Verbreitung aufgrund des geringen Standardisierungsgrades.

Aus der FR-A-2 648 592 ist ein Verfahren zum Einbuchen von Artikeln für einen Einkaufswagen bekannt, bei dem sämtliche Artikel sowohl mit einem Strichcode als auch mit einem Transponder-Etikett versehen sind. Bevor der Käufer einen Artikel in seinen Einkaufswagen legt, kann er dessen Strichcode mit einem Lesestift auslesen. Wenn er den Artikel anschließend in den Einkaufswagen legt, wird von einer elektronischen Einheit die in dem Transponder-Etikett gespeicherte Information ausgelesen, und im Fall einer Übereinstimmung der ausgelesenen Informationen wird der betreffende Artikel eingebucht.

Die DE 298 00 833 U 1 offenbart eine Vorrichtung zur Identifikation eines Objektes auf einem Förderband, beispielsweise in einer Paketsortieranlage oder einer Fertigungsstraße. Die Objekte werden mit Hilfe von auf ihnen angebrachten Transponder-Etiketten identifiziert. Mit Hilfe eines zusätzlichen optischen Sensors wird die Größe eines Objektes vermessen, um bei Bedarf die Antenneneinrichtung zum Auslesen der Transponder-Daten in Abhängigkeit von der Objektgröße an die Objekte heranzufahren bzw. von diesen weg zu bewegen.

Aus der WO 99/05660 ist ein Inventursystem für eine Bibliothek bekannt, bei dem die Bücher mit RFID-Transpondern ausgestattet sind. Zum ersten Erstellen einer Inventurdatenbank können auf den Büchern bereits vorhandene Strichcodes oder andere Etiketten verwendet werden, um in einem Computerprogramm die in diesen Etiketten enthaltene Information dann dem neuen auf dem Buch anzubringenden RFID-Etikett zuzuordnen.

Es ist eine Aufgabe der Erfindung, ein Verfahren sowie ein Vorrichtung der eingangs genannten Art so auszubilden, daß auch in den genannten problematischen Fällen eine genaue Positionsbestimmung und eine eindeutige Identifizierung eines Objektes möglich ist.

Diese Aufgabe wird erfindungsgemäß ausgehend von einem Verfahren der eingangs genannten Art dadurch gelöst, daß das Objekt zusätzlich durch zumindest einen optischen Sensor abgetastet wird und daß aus einer Kombination von durch den optischen Sensor erfaßten optischen Daten mit den erfaßten Transponder-Daten das Objekt identifiziert und seine Position bestimmt wird.

Eine erfindungsgemäß ausgebildete Vorrichtung umfaßt eine elektromagnetische Sensoreinheit, mit der zumindest ein an dem jeweiligen Objekt vorgesehener Transponder zum Abstrahlen von in dem Transponder gespeicherten, das jeweilige Objekt kennzeichnende Transponder-Daten anregbar und die abgestrahlten Transponder-Daten erfaßbar sind, wobei zusätzlich ein optischer Sensor zum Abtasten des Objekts und eine Auswerteinheit zum eindeutigen Identifizieren des Objekts und zum Bestimmen der Position des Objekts aus einer Kombination von durch den optischen Sensor erfaßbaren optischen Daten mit den erfaßbaren abgestrahlten Transponder-Daten vorgesehen ist.

Durch die Kombination eines RFID-Systems mit einer optischen Abtasteinheit werden die Vorteile der beiden unterschiedlichen Systeme optimal miteinander kombiniert. Optische Abtasteinheiten haben den Vorteil, daß eine exakte Positionsermittlung möglich ist. Die Nachteile optischer Abtastsysteme, nämlich relativ geringer Informationsgehalt, Verschmutzungsempfindlichkeit und das Erfordernis einer optisch freien Strecke zwischen Sensor und Objekt, werden durch die entsprechenden Eigenschaften des Transponder-Systems kompensiert. Somit ist durch die erfindungsgemäße Kombination einer optischen Abtasteinheit mit einem RFID-System sowohl eine eindeutige Identifizierung als auch eine eindeutige Positionsbestimmung eines mit einem entsprechenden Transponder versehenen Objektes möglich.

Nach einer vorteilhaften Ausführungsform der Erfindung erfolgt die Positionsbestimmung durch Auswertung der optischen Daten und/oder die Identifizierung des Objekts durch Auswertung der Transponder-Daten. Da durch die optische Erfassungseinheit eine exakte Bestimmung der Position des Objektes möglich ist, kann, wenn beispielsweise zwei oder mehrere Objekte durch das Lesegerät des Transponders innerhalb eines Lesefeldes erfaßt werden, die Position der Objekte über die optische Auswerteeinheit durch Auswertung der optischen Daten des jeweiligen Objekts bestimmt werden. Dabei ist es möglich, wie es im folgenden genauer ausgeführt wird, daß auch bei unvollständiger Erkennung der optischen und/oder Transponder-Daten durch eine Auswertung einer entsprechenden Kombination dieser Daten sowohl eine eindeutige Identifikation als auch eine eindeutige Bestimmung der Position des Objektes erreicht wird.

Nach einer bevorzugten Ausführungsform der Erfindung wird durch den optischen Sensor ein auf dem Objekt angeordneter Strichcode erfaßt und decodiert, wobei aus den decodierten Strichcode-Daten zusammen mit den Transponder-Daten das Objekt identifiziert und seine Position bestimmt wird. Die Verwendung von auf dem Objekt angeordneten Strichcodes erlaubt zum einen ein preiswertes und weltweit standardisiertes Verfahren zur optischen Abtastung, wobei mittels üblicher Strichcodeabtasteinheiten die Koordinaten des gelesenen Strichcodes im Raum sehr genau bestimmt werden können. Da der maximale Informationsgehalt von Strichcodes relativ gering ist und beispielsweise ca. 30 bis 50 Zeichen bei einer eindimensionalen Abtastung umfaßt, können, falls dies erforderlich ist, in dem Transponder abgespeicherte Transponder-Daten mit wesentlich größerem Informationsgehalt empfangen und ausgewertet werden.

Vorteilhaft kann ein erfindungsgemäßes Verfahren weiterhin dadurch gekennzeichnet sein, daß zumindest ein Teil der in dem Transponder abgespeicherten Daten den in dem Strichcode codierten Daten entsprechen, daß die erfaßten Transponder-Daten mit den entsprechenden decodierten Strichcode-Daten verglichen werden, daß bei unvollständigen erkannten Strichcode-Daten eine Übereinstimmung der erkannten Teil-Strichcode-Daten mit den erfaßten Transponder-Daten gesucht wird, und daß bei entsprechend gefundener Übereinstimmung das Objekt durch die Transponder-Daten identifiziert und seine Position als Position des teilweise decodierten Strichcodes bestimmt wird.

Auf diese Weise ist es möglich, daß auch bei einer unvollständigen Erfassung des auf dem Objekt vorhandenen Strichcodes sowohl eine einwandfreie Identifikation als auch eine exakte Positionsbestimmung des Objektes möglich ist. Werden beispielsweise mehrere Transponder innerhalb des Lesebereiches erfaßt, so werden die in den Transponder-Daten enthaltenen Identifikationsdaten des Objektes mit den über den Strichcode erfaßten Identifikationsdaten verglichen. Bei einer unvollständigen Erfassung der Strichcode-Daten, beispielsweise aufgrund von Verschmutzung oder teilweiser Abdeckung des Strichcodes, wird eine Übereinstimmung der erkannten Teil-Strichcode-Daten mit den erfaßten Transponder-Daten gesucht und bei entsprechend gefundener Übereinstimmung wird das Objekt gemäß den Transponder-Daten identifiziert. Die Position kann durch die mittels der Strichcodeerfassungseinheit exakt feststellbaren Position des teilweise erkannten Strichcodes bestimmt werden.

Nach einer weiteren vorteilhaften Ausführungsform kann durch die erfindungsgemäße Kombination die Lesesicherheit deutlich erhöht werden, da die für die Identifikation verwendeten Informationen auf zwei unterschiedlichen Wegen mit unterschiedlichen physikalischen Prinzipien codiert und ausgelesen werden. Erfindungsgemäß erfolgt dies vorteilhaft dadurch, daß zumindest ein Teil der in dem Transponder abgespeicherten Daten den in dem Strichcode codierten Daten entsprechen, daß die erfaßten Transponder-Daten mit den entsprechenden decodierten Strichcode-Daten verglichen werden, und daß nur bei entsprechender Übereinstimmung der Transponder-Daten mit den Strichcode-Daten das Objekt entsprechend den Daten als erfolgreich identifiziert gilt. Dem System wird somit eine Redundanz aufgeprägt, die aufgrund der unterschiedlichen physikalischen Eigenschaften der Transportwege eine sehr geringer Fehleranfälligkeit besitzt.

Nach einer weiteren vorteilhaften Ausführungsform der Erfindung wird durch den optischen Sensor das optische Remissionsprofil des Objektes ermittelt, zum optischen Erfassen der Position des Transponders das ermittelte Remissionsprofil auf für die optische Ausbildung des Transponder typische Werte untersucht, und bei erkanntem Transponder erfolgt die Positionsbestimmung des Objekts durch Auswertung der erkannten Position des Transponders und die Identitätsbestimmung des Objekts durch Auswertung der erfaßten Transponder-Daten.

Anstelle eines Strichcodes kann somit auch das optische Remissionsprofil des Objekts durch eine optische Erfassungseinheit erfaßt und ausgewertet werden. Insbesondere kann zum Erkennen des Transponders das erfaßte Remissionsprofil des Objekts auf eindeutige Flächen vorgegebener optischer Eigenschaften, beispielsweise Farbe, Helligkeit, Form oder dergleichen untersucht werden, wobei bei Erkennen eine einzigen entsprechenden Fläche am Objekt diese Fläche als Transponder identifiziert wird. Durch diese optische Auswertung kann wiederum die Position des Transponders im Raum exakt bestimmt werden, so daß eine exakte Zuordnung zwischen der Transponderposition und den das Objekt identifizierenden Transponder-Daten erfolgen kann.

Nach einer weiteren vorteilhaften Ausführungsform der Erfindung wird durch den optischen Sensor das optische Remissionsprofil des abgetastete Objekts ermittelt, das ermittelte Remissionsprofil mit einem aus den erfaßten Transponder-Daten ermittelten, in dem Transponder gespeicherten Remissionsprofil des den Transponder tragenden Objekts verglichen, und bei ausreichender Übereinstimmung der Remissionsprofile das abgetastete Objekt durch die erfaßten Transponder-Daten identifiziert.

Besitzen aufeinanderfolgende Objekte eindeutig unterscheidbare Remissionsprofile, so ist durch die Abspeicherung dieser Remissionsprofile in dem am jeweiligen Objekt vorgesehenen Transponder in der beschriebenen Weise eine eindeutige Identifizierung des jeweiligen Objektes über das erfaßte Remissionsprofil möglich. Durch die optische Erfassung ist wiederum eine exakte Bestimmung der Position des jeweiligen Objektes möglich, so daß auch auf diese Weise eine eindeutige Zuordnung des Transponders zum Objekt und damit eine Festlegung der Position des Objektes erreicht wird.

Es ist weiterhin auch möglich, daß durch den optischen Sensor Geometriedaten des Objekts, beispielsweise die Kontur und/oder die Länge und/oder die Breite und/oder Höhe des abgetasteten Objektes ermittelt wird, daß die ermittelten Geometriedaten mit entsprechenden aus den erfaßten Transponder-Daten ermittelten, in dem Transponder gespeicherten Geometriedaten des den Transponder tragenden Objekt verglichen werden, und daß bei ausreichender Übereinstimmung der Geometriedaten das abgetastete Objekt durch die erfaßten Transponder-Daten identifiziert wird. Ähnlich wie bei der Auswertung des Remissionsprofils kann somit über die in dem Transponder abgespeicherten Geometriedaten und einem Vergleich mit entsprechend erfaßten Geometriedaten aufeinanderfolgender Objekte mit eindeutigen unterscheidbaren Geometriedaten eine eindeutige Zuordnung des jeweiligen Transponders zu dem jeweiligen Objekt erfolgen. Somit ist auch auf diese Weise eine eindeutige Identifizierung und Positionsbestimmung der erfaßten Objekte möglich.

Die Erfassung eines Strichcodes, der Geometriedaten sowie des Remissionsprofils kann jeweils in Alleinstellung oder auch in beliebigen Kombinationen erfolgen. Mit Laserscannern aktueller Bauart können beispielsweise Strichcode, Geometriedaten und Remissionsprofil gleichzeitig erfaßt werden, wodurch eine erhöhte Redundanz bzw. eine Verbesserung der Aussagesicherheit erreicht wird.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher beschrieben, in dieser zeigen:

Fig. 1    eine schematische perspektivische Darstellung einer erfindungsgemäß ausgebildeten Abtastvorrichtung und

Fig. 2    eine Detailansicht aus Fig. 1.

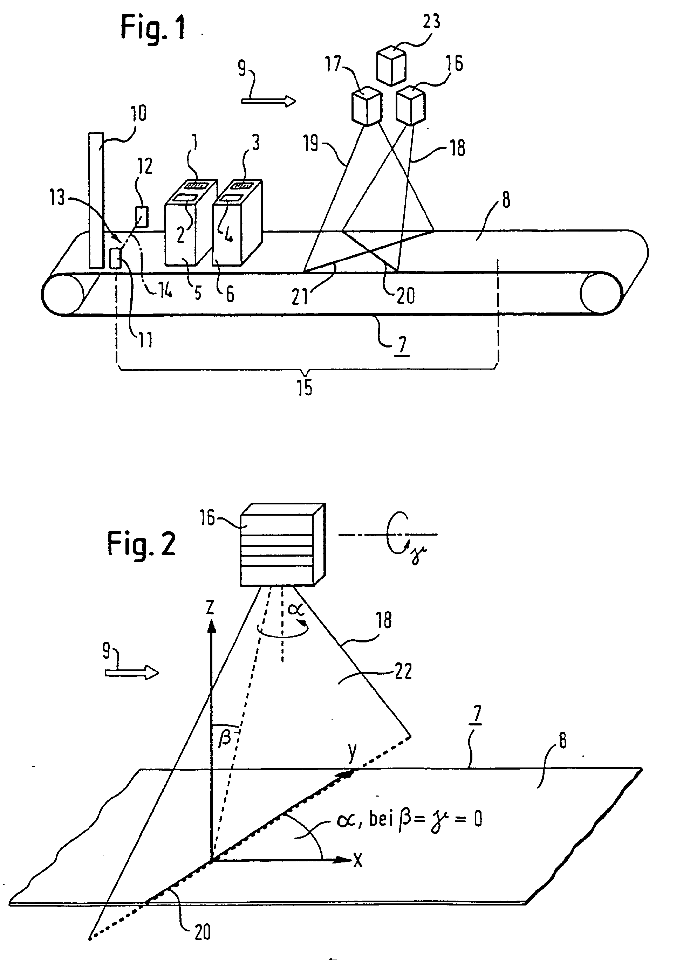

In Fig. 1 sind zwei mit jeweils einem Strichcode 1, 3 sowie je einem Transponder 2, 4 versehene Objekte 5, 6 auf einem Förderband 7 angeordnet, dessen Obertrum 8 entlang eines Pfeils 9 bewegbar ist. Dabei sind die Objekte 5, 6 in Transportrichtung 9 in einem relativ geringen Abstand zueinander angeordnet.

Am Beginn des Förderbandes 7 ist eine optionale Höheerfassungseinrichtung 10 sowie eine einen Sender 11 und einen Empfänger 12 umfassende Lichtschranke 13 angeordnet, wobei von dem Sender 11 ein Lichtstrahl 14 in Richtung des Empfängers ausgesandt wird. Die Lichtschranke definiert den Beginn eines Lesebereichs 15, innerhalb dessen über zwei oberhalb des Förderbandes 7 angeordnete, als Strichcodeleser 16, 17 ausgebildete optische Erfassungseinheiten sowie über ein RFID-Lesegerät 23 die Strichcodes 1, 3 abgetastet bzw. die Transponder 2, 4 angeregt werden. Die durch diese Anregung von den Transpondern 2, 4, ausgesandten Transponder-Daten werden wiederum von dem RFID-Lesegerät 23 empfangen.

Die Strichcodeleser 16, 17 senden jeweils einen beispielsweise über ein Polygonspiegelrad abgelenkten Abtaststrahl 18, 19 in Richtung des Förderbandes 7, so daß auf dem Förderband 7 Abtastlinien 20, 21 abgebildet werden. Beim Bewegen der Objekte 5, 6 in Richtung des Pfeils 9 werden die Strichcodes 1 und 3 jeweils zumindest teilweise oder ganz von den Abtastlinien 20, 21 überstrichen, so daß die in den Strichcodes 1, 3 enthaltene Information decodiert und zur weiteren Auswertung einer nicht dargestellten Auswerteschaltung zugeführt wird. Dabei ist es möglich, daß nur teilweise überstrichene Stichcodes durch die Auswerteschaltung zu einem vollständige Strichcode zusammengesetzt werden können und auf diese Weise der gesamte Strichcode decodiert werden kann.

Das RFID-Lesegerät 23 erzeugt ein hochfrequentes elektromagnetisches Feld, das über eine Antennenspule in Richtung der Objekte 5, 6 abgestrahlt wird. Bei einer entsprechenden Annäherung der Objekte 5, 6 an das RFID-Lesegerät 23 wirken die Transponder 2, 4 mittels transformatorischer Kopplung bei solchen induktiven Systemen auf das hochfrequente Magnetfeld zurück. Beispielsweise wird durch das hochfrequente Magnetfeld bei Eintreten der Objekte 5, 6 in den Lesebereich 15 in in den Transpondern 2, 4 jeweils vorgesehenen Spulen eine Spannung erzeugt, durch die ein ebenfalls in den Transpondern 2, 4 vorgesehener Mikroprozessor versorgt wird. Der auf diese Weise angeregte Mikroprozessor steuert seinerseits wieder den Strom in der jeweiligen Spule der Transponder 2, 4, wodurch wiederum eine Änderung des Stroms bzw. der Spannung innerhalb der als Antenne ausgebildeten Primärspule des RFID-Lesegeräts 23 bewirkt wird. Durch die Steuerung des Spulenstroms innerhalb der Transponder 2, 4 können somit in den Transpondern 2, 4 gespeicherte Transponder-Daten an das RFID-Lesegerät 23 gesendet werden.

Bei größeren Abständen zwischen den Transpondern 2, 4 und dem RFID-Lesegerät 23 kann die Datenübertragung mittels elektromagnetischer Wellen (Radiowellen) erfolgen, wobei in diesem Fall bevorzugt Transponder 2, 4 mit eigener Spannungsversorgung eingesetzt werden.

Während in dem in Fig. 1 dargestellten Ausführungsbeispiel zwei Strichcodeleser 16, 17 vorgesehen sind, ist die Erfindung auch nur mit einem Strichcodeleser oder mit mehreren Strichcodelesern durchführbar. Ebenfalls können anstelle eines einzigen RFID-Lesegeräts 23 mehrere entsprechende Lesegeräte vorgesehen sein.

Während mit dem RFID-Lesegerät 23 eine Positionsbestimmung der Transponder 2, 4 und damit der Objekte 5, 6 innerhalb des Lesebereichs 15 nur relativ ungenau möglich ist, ist mit den Strichcodelesern 16, 17 eine sehr genaue Positionsbestimmung der Strichcodes 1, 3 und damit der Objekte 5, 6 innerhalb des Lesebereichs 15 möglich.

Zur Erläuterung der Positionsbestimmung über die optische Abtastung sind in Fig. 2 die unterschiedlichen Abtastwinkel $\alpha$, $\beta$ und $\gamma$ dargestellt. Dabei ist zur Vereinfachung in Fig. 2 lediglich der Strichcodeleser 16 abgebildet.

Der Winkel $\alpha$ gibt eine Drehung des Strichcodelesers 16 um die z-Achse an, wobei $\alpha = 0°$ ist, wenn die Abtastlinie 20 parallel zur x-Achse verläuft.

Der Winkel $\beta$ definiert die Verkippung der durch den periodisch verschwenkten Abtaststrahl 18 gebildeten, V-förmigen Abtastebene 22 um die y-Achse an, wobei bei der in Fig. 2 dargestellten, sich ergebenden Abtastrichtung gegen die Pfeilrichtung 9 der Winkel $\beta$ negativ gewählt wird.

Der Winkel $\gamma$ gibt eine Verkippung des Strichcodelesers 16 um die x-Achse an, so daß ein Winkel $\gamma = 0°$ eine Lesung senkrecht von oben auf das Förderband 7 und ein Winkel $\gamma \neq 0°$ eine seitliche Lesung angibt. Die Bestimmung der Position eines Strichcodes während des normalen Abtastbetriebes kann bei $\gamma = 0°$, d.h. bei einer Lesung von oben, beispielsweise durch folgende Gleichungen erfolgen:

$$x = x_0 + d_0 * \sin(scanw) * \cos(\alpha) - d_0 * \sin(\beta_2) * \sin(\alpha) * \cos(scanw)$$

$$y = y_0 + d_0 * \sin(scanw) * \sin(\alpha) + d_0 * \sin(\beta_2) * \cos(\alpha) * \cos(scanw)$$

$$z = z_0 - d_0 * \cos(scanw) * \cos(\beta_2)$$

Für $\gamma \neq 0°$ ergibt sich die Position der Strichcodes mit den Werten der oben angegebenen Gleichungen wir folgt:

$$x_\gamma = x$$

$$y_\gamma = y_0 + \cos(\gamma) * (y-y_0) - \sin(\gamma) * (z - z_0)$$

$$z_\gamma = z_0 + \sin(\gamma) * (y-y_0) + \cos(\gamma) * (z - z_0)$$

Um den für die Zuordnung der Strichcodes zu dem den Strichcode tragenden Objekt relevanten x-Positionswert ermitteln zu können, muß zusätzlich der dem Strichcode zuzuordnende Inkrementalgeberstand berücksichtigt werden. Ein entsprechendes Startsignal für einen Inkrementalgeber kann beispielsweise beim Unterbrechen des Lichtstrahls 14, d.h. beim Eintreten eines Objekts in den Lesebereich 15 erzeugt werden.

Bei scanw handelt es sich um den Scan-Winkel, der die Position des abgetasteten Strichcodes innerhalb der Abtastlinie 20 angibt. Dabei wird die Winkelhalbierende der V-förmigen Abtastebene der als scanw = 0° definiert.

Für den Winkel $\beta_2$ gilt $\beta_2 = \beta$ - (schwingw), wobei der Schwingwinkel schwingw eine optionale Verschwenkung der V-förmigen Abtastebene 22 angibt, durch die anstelle einer Abtastebene eine dreidimensionale Abtastpyramide erzeugt wird.

Die zur Positionsbestimmung der jeweiligen Positionskoordinaten eines Strichcodes erforderlichen Abtastwinkel sowie die Koordinaten $x_0$, $y_0$, $z_0$ eines Strichcodelesers sind aus der Justierung des Systems üblicherweise bekannt oder können durch Einlernvorgänge ermittelt werden.

Mit do ist der Abstand zwischen Strichcodeleser und abgetastetem Strichcode bezeichnet, der beispielsweise durch eine Abstandsmessung ermittelt werden kann.

Sind die Lichtschranken in einem gemeinsamen Rahmen angeordnet, so ist üblicherweise jeweils der Abstand einer Lichtschranke zur Außenkante des Rahmens durch die Justierung im Werk bekannt, so daß lediglich für alle Lichtschranken gemeinsam der Abstand zwischen der den Beginn des Lesebereichs 15 definierenden Lichtschranke 13 und der Außenkante des Rahmens berechnet werden muß. Grundsätzlich ist für die Zuordnung zwischen Strichcode und Objekt nur die x-Komponente relevant. Die y- und z-Koordinaten können jedoch zur Plausibilisierung eines Leseergebnisses herangezogen werden.

Die gefundenen Strichcodepositionen werden aufgrund der ermittelten x-Position und der bekannten Inkrementalgeberskalierung auf die Position der Startlichtschranke 13 rückgerechnet und dann mit den Positionen der im Lesebereich 15 befindlichen Objekte verglichen. Liegt die Strichcodeposition innerhalb des Zuordnungsbereichs eines Objekts, so erfolgt die Zuordnung.

Die beschriebene Positionsbestimmung kann nicht nur bei Abtastung von Strichcodes 1, 3, sondern auch bei einer sonstigen geeigneten optischen Abtastung der Objekte 5, 6 verwendet werden. Beispiele für sonstige geeignete optische Abtastverfahren sind im folgenden angegeben.

In einer weiteren Ausgestaltung des erfindungsgemäßen Verfahrens enthält beispielsweise jeder Strichcode 1, 3 sowie der entsprechende Transponder 2, 4 eines Objekts 5, 6 eine das jeweilige Objekt 5, 6 eindeutig identifizierende Informationscodierung.

Sind Objekte 5, 6 so dicht hintereinander angeordnet, wie es in Fig. 1 dargestellt ist, so werden von dem RFID-Lesegerät 23 die Transponder-Daten von beiden Transpondern 2, 4 empfangen, so daß eine Zuordnung der in den Transponder-Daten enthaltenen Informationscodierung zu dem jeweiligen Objekt 5, 6 nicht möglich ist.

Sind durch die Strichcodeleser 16, 17 die Strichcodes 1, 3 vollständig lesbar und decodierbar, so kann allein anhand dieser Abtastung bereits eine eindeutige Zuordnung der jeweils in den Strichcodes 1, 3 enthaltenen Informationscodierung zu den Objekten 5, 6 erfolgen.

Ist jedoch nur eine unvollständige Lesung der Strichcodes 1, 3, beispielsweise aufgrund von Verschmutzung oder Teilabdeckung der Strichcodes 1, 3 möglich, so kann in Verbindung mit den erfaßten Transponder-Daten trotz dieser unvollständigen Lesung der Strichcodes eine eindeutige Zuordnung der Informationscodierung zu den Objekten 5, 6 erfolgen, wie es durch die nachfolgende Tabelle verdeutlicht wird.

| | | |
|---|---|---|
| **RFID Code (Transponder)** | Transponder 1 = "0111ABCDEFxxxxxxxx" | Transponder 2 = "0112XYZZZZyyyyyyyy" |
| **Barcodeinformation komplett** | BarCode = "0111ABCDEF" | BarCode2 = "0112XYZZZZ" |
| **Erkannte Barcodeinformation** | "0111AB......" Teilstring "CDEF" nicht erkannt | "....2XYZZZZ" Teilstring "011" nicht erkannt |
| | | |
| **Genaue Transponderposition** | Nicht ermittelbar | Nicht ermittelbar |
| **Genaue Barcodeposition** | Pos Code1 = x1, y1, z1 | Pos Code2 = x2, y2, z2 |
| | | |
| **Match der Teilstring -Infos, Rekonstruierte Codeinfo** | Code 1 = "0111ABCDEF" | Code2 = "0112XYZZZZ" |
| **Damit auch Position der Transponderinformation bekannt, Zuordnung Bar-code - Transponder -Objekt durchführen** | **Objekt 1:** Pos Code 1 = x1, y1, z1 BarCode 1 = "0111ABCDEF" Transponder1 = "0111ABCDEFxxxxxxxx" | **Objekt 2:** Pos Code2 = x2, y2, z2 BarCode2 = "0112XYZZZZ" Transponder2= "0112XYZZZZyyyyyyyy" |

Da durch die Strichcodeleser 16, 17 die jeweils exakte Position der Strichcodes 1, 3 bestimmt werden kann und über den Vergleich der von den Strichcodelesern 16, 17 erkannten Teilstrings mit den von den Transpondern 2, 4 vollständig empfangenen Informationscodierungen eine eindeutige Zuordnung zwischen dem jeweiligen Strichcode und dem jeweiligen Transpondern möglich ist, ist auf diese Weise eine eindeutige Positionsbestimmung des jeweiligen Objekts in dem Lesebereich 15 möglich.

In einer weiteren Variante der Erfindung ist die Erhöhung der Lesesicherheit durch eine gemeinsame Auswertung der erfaßten Transponder-Daten und der erfaßten optischen Daten möglich. Durch redundante, teilidentische oder identische Informationscodierung in dem jeweiligen Transponder 2, 4 und dem jeweiligen Strichcode 2, 3 können zur Erhöhung der Lesesicherheit die aus den Transpondern 2, 4 und den Strichcodes 1, 3 ermittelten Informationen gegeneinander auf Übereinstimmung bzw. Plausibilität geprüft werden. Somit kann auch im Falle einer vollständigen Lesung der Strichcodes 1, 3 die Lesesicherheit des Gesamtsystems gegenüber einer reinen Strichcodelesung verbessert werden.

Die Falschleserate kann dabei erheblich reduziert werden, da die gegeneinander geprüften Informationen auf zwei unterschiedlichen Wegen und mit unterschiedlichen physikalischen Prinzipien codiert und ausgelesen werden.

Anstelle der in der in der Fig. 1 dargestellten Strichcodes 1, 3 können auch lediglich die Transponder 2, 4 an den Objekten 5, 6 vorgesehen sein. In diesem Falle können die Transponder 2, 4 so an der Außenseite der Objekte 5, 6 vorgesehen sein, daß sie bei einer Ermittlung des optischen Remissionsprofils der Objekte 5, 6 beispielsweise aufgrund ihrer Farbe eindeutig an dem jeweiligen Objekt 5, 6 erkannt werden.

Da durch die entsprechende optische Abtastung wiederum eine exakte Positionsbestimmung möglich ist, kann wiederum eine eindeutige Zuordnung der aus den Transponder-Daten ermittelten, das jeweilige Objekt kennzeichnenden Informationscodierung zu dem jeweiligen auf optischem Wege erfaßten Transponder und damit zu dem jeweiligen Objekt erfolgen.

Während bei dieser Variante der Transponder jeweils eindeutig optisch erkennbar an der Außenseite des Objektes vorgesehen sein muß, ist bei der Ausführungsform mit auf dem Objekt angebrachten Strichcodes eine optische Sichtbarkeit der Transponder an der Außenseite der Objekte nicht erforderlich. Die Transponder können beispielsweise unmittelbar in einem zweischichtig hergestellten Strichcodelabel zwischen den beiden Schichten angeordnet sein.

In einer weiteren Ausgestaltung des erfindungsgemäßen Verfahrens können in den jeweiligen Transpondern 2, 4 des jeweiligen Objekts Remissionsprofile und/oder die jeweiligen Objektgeometriedaten des Objekts (Länge/Breite/Höhe/Kontur) gespeichert sein. Wenn die Objekte 5, 6 den Lesebereich 15 durchfahren, werden von den optischen Erfassungseinheiten 16, 17 jeweils die Objektremissionsprofile bzw. die Objektgeometriedaten erfaßt. Gleichzeitig werden die in den jeweiligen Transpondern 2, 4 gespeicherten Objektremissionsprofile bzw. Objektgeometriedaten von dem RFID-Lesegerät 23 empfangen.

In einer nicht dargestellten Auswerteeinheit werden die jeweils empfangenen Daten mit den abgetasteten Daten verglichen, so daß bei Objekten 5, 6 mit eindeutig unterscheidbaren Remissionsprofilen bzw. Geometriedaten wiederum eine eindeutige Zuordnung des jeweiligen Transponders 2, 4 zu dem Objekt 5, 6 möglich ist. Auch in diesem Falle kann somit durch die Kombination der eindeutigen Positionsbestimmung auf optischem Wege mit einer eindeutigen Objektidentifikation durch Erfassen der Transponder-Daten eine eindeutige Zuordnung erzielt werden.

Erfindungsgemäß ist es auch möglich, die beschriebenen Ausführungsformen miteinander zu kombinieren, so daß eine weitere Verbesserung der Zuordnungssicherheit erzielt werden kann. Versagt eines der Kriterien, beispielsweise aufgrund eines zu sehr verschmutzten Strichcodes bzw. ist ein entsprechendes Kriterium nicht anwendbar, beispielsweise bei fehlerhaftem Strichcodelabel, so stehen die übrigen Überprüfungskriterien zur Verfügung, so daß weiterhin eine eindeutige Zuordnung möglich ist.

**Bezugszeichenliste**

| | |
|---|---|
| 1 | Code |
| 2 | Transponder |
| 3 | Strichcode |
| 4 | Transponder |
| 5 | Objekt |
| 6 | Objekt |
| 7 | Förderband |
| 8 | Obertrum |
| 9 | Pfeil |
| 10 | Höhenerfassungseinrichtung |
| 11 | Sender |

12 Empfänger
13 Lichtschranke
14 Lichtstrahl
15 Lesebereich
16 Strichcodeleser/optische Erfassungseinheit
17 Strichcodeleser/optische Erfassungseinheit
18 Abtaststrahl
19 Abtaststrahl
20 Abtastlinie
21 Abtastlinie
22 Abtastebene
23 RFID-Lesegerät

**Patentansprüche**

**1.** Verfahren zum Identifizieren und zur Positionsbestimmung von Objekten (5, 6), bei dem zumindest ein an dem jeweiligen Objekt (5, 6) vorgesehener Transponder (2,4) zum Abstrahlen von in dem Transponder (2,4) gespeicherten, das jeweilige Objekt (5, 6) kennzeichnende Transponder-Daten angeregt wird und die abgestrahlten Transponder-Daten erfaßt werden,
**dadurch gekennzeichnet ,**
**dass** das Objekt (5, 6) zusätzlich durch zumindest einen optischen Sensor (16, 17) abgetastet wird und dass aus einer Kombination von durch den optischen Sensor (16, 17) erfassten optischen Daten mit den erfaßten Transponder-Daten das Objekt (5, 6) identifiziert und seine Position bestimmt wird.

**2.** Verfahren nach Anspruch 1,
**dadurch gekennzeichnet ,**
**dass** die Positionsbestimmung durch Auswertung der optischen Daten erfolgt.

**3.** Verfahren nach einem der Ansprüche 1 oder 2,
**dadurch gekennzeichnet ,**
**dass** die Identifizierung des Objektes (5, 6) durch Auswertung der Transponder-Daten erfolgt.

**4.** Verfahren nach einem der vorhergehenden Ansprüche,
**dadurch gekennzeichnet ,**
**dass** durch den optischen Sensor (16, 17) ein auf dem Objekt (5, 6) angeordneter Strichcode (3) erfasst und decodiert wird und dass aus den decodierten Strichcode-Daten zusammen mit den Transponder-Daten das Objekt (5, 6) identifiziert und seine Position bestimmt wird.

**5.** Verfahren nach Anspruch 4,
**dadurch gekennzeichnet ,**
**dass** zumindest ein Teil der in dem Transponder (2, 4) abgespeicherten Daten den in dem Strichcode (3) codierten Daten entsprechen, dass die erfassten Transponder-Daten mit den entsprechenden decodierten Strichcode-Daten verglichen werden, dass bei unvollständig erkannten Strichcode-Daten eine Übereinstimmung der erkannten Teil-Strichcode-Daten mit den erfaßten Transponder-Daten gesucht wird, und dass bei entsprechend gefundener Übereinstimmung das Objekt (5, 6) durch die Transponder-Daten identifiziert und seine Position als Position des teilweise decodierten Strichcodes (3) bestimmt wird.

**6.** Verfahren nach Anspruch 4 oder 5,
**dadurch gekennzeichnet ,**
**dass** zumindest ein Teil der in dem Transponder (2, 4) abgespeicherten Daten den in dem Strichcode (3) codierten Daten entsprechen, dass die erfassten Transponder-Daten mit den entsprechenden decodierten Strichcode-Daten verglichen werden, und dass nur bei entsprechender Übereinstimmung der Transponder-Daten mit den Strichcode-Daten das Objekt (5, 6) entsprechend den Daten als erfolgreich identifiziert gilt.

**7.** Verfahren nach einem der vorhergehenden Ansprüche,
**dadurch gekennzeichnet ,**
**dass** durch den optischen Sensor (16, 17) das optische Remissionsprofil des Objektes (5, 6) ermittelt wird, dass zum optischen Erfassen der Position des Transponders (2, 4) das ermittelte Remissionsprofil auf für die optische Ausbildung des Transponders (2, 4) typische Werte untersucht wird und dass bei erkanntem Transponder (2, 4) die Positionsbesimmung des Objekts (5, 6) durch Auswertung der erkannte Position des Transponders (2, 4) und die Identitätsbestimmung des Objekts (5, 6) durch Auswertung der erfassten Transponder-Daten erfolgt.

**8.** Verfahren nach Anspruch 7,
**dadurch gekennzeichnet ,**
**dass** zum Erkennen des Transponders (2, 4) das Remissionsprofil auf eindeutige Flächen vorgegebener optischer Eigenschaften, beispielsweise Farbe, Helligkeit, Form oder dergleichen, am Objekt (5, 6) untersucht wird und dass bei Erkennen einer einzigen entsprechenden Fläche am Objekt (5, 6) diese Fläche als Transponder (2, 4) identifiziert wird.

**9.** Verfahren nach einem der vorhergehenden Ansprüche,
**dadurch gekennzeichnet ,**
**dass** durch den optischen Sensor (16, 17) das optische Remissionsprofil des abgetasteten Objektes (5, 6) ermittelt wird, dass das ermittelte Remissionsprofil mit einem aus den erfaßten Transponder-Daten ermittelten, in dem Transponder (2, 4) gespeicherten Remissionsprofil des den Transponder (2, 4) tragenden Objekts (5, 6) verglichen wird, und dass bei ausreichender Übereinstimmung der Remissionsprofile das abgetastete Objekt (5, 6) durch die erfassten Transponder-Daten identifiziert wird.

**10.** Verfahren nach einem der Ansprüche 7 bis 9,
**dadurch gekennzeichnet ,**
**dass** das optische dreidimensionale Remissionsprofil des Objekts (5, 6) ermittelt wird.

**11.** Verfahren nach einem der vorhergehenden Ansprüche,
**dadurch gekennzeichnet ,**
**dass** durch den optischen Sensor (16, 17) Geometriedaten des Objekts (5, 6), beispielsweise die Kontur und/oder die Länge und/oder die Breite und/oder die Höhe des abgetasteten Objektes (5, 6) ermittelt wird, dass die ermittelten Geometriedaten mit entsprechenden aus den erfaßten Transponder-Daten ermittelten, in dem Transponder (2, 4) gespeicherten Geometriedaten des den Transponder (2, 4) tragenden Objekts (5, 6) verglichen werden, und dass bei ausreichender Übereinstimmung der Geometriedaten das abgetastete Objekt (5. 6) durch die erfassten Transponder-Daten identifiziert wird.

**12.** Vorrichtung zum Identifizieren und zur Positionsbestimmung von Objekten (5, 6), mit einer elektromagnetischen Sensoreinheit (23), mit der zumindest ein an dem jeweiligen Objekt (5, 6) vorgesehener Transponder (2, 4) zum Abstrahlen von in dem Transponder (2, 4) gespeicherten, das jeweilige Objekt (5, 6) kennzeichnende Transponder-Daten anregbar und die abgestrahlten Transponder-Daten erfaßbar sind, insbesondere zum Durchführen des Verfahrens nach einem der vorhergehenden Ansprüche,
**dadurch gekennzeichnet ,**
**dass** zusätzlich zumindest ein optischer Sensor (16, 17) zum Abtasten des Objekts (5, 6) und dass eine Auswerteinheit zum eindeutigen Identifizieren des Objekts (5, 6) und zum Bestimmen der Position des Objekts (5, 6) aus einer Kombination von durch den optischen Sensor (16, 17) erfaßbaren optischen Daten mit den erfaßbaren abgestrahlten Transponder-Daten vorgesehen ist.

**13.** Vorrichtung nach Anspruch 12,
**dadurch gekennzeichnet ,**
**dass** der optische Sensor als Strichcodeerfassungseinheit (16, 17) ausgebildet ist.

**14.** Vorrichtung nach einem der Ansprüche 12 oder 13,
**dadurch gekennzeichnet ,**
**dass** der optische Sensor als Remissionserfassungseinheit ausgebildet ist.

**15.** Vorrichtung nach Anspruch 12, 13 oder 14,
**dadurch gekennzeichnet ,**
**dass** der optische Sensor als Geometriedatenerfassungseinheit ausgebildet ist.

**Claims**

1.  A method for the identification and for the location determination of objects (5, 6), wherein at least one transponder (2, 4) provided on the respective object is excited to emit transponder data stored in the transponder (2, 4) and characterizing the respective object (5, 6) and wherein the transponder data emitted are detected, **characterized in that** the object (5, 6) is additionally scanned by at least one optical sensor (16, 17); and **in that** the object (5, 6) is identified and/or its location is determined from a combination of optical data detected by the optical sensor (16, 17) and the identified transponder data.

2.  A method in accordance with claim 1, **characterized in that** the location determination is performed by analysis of the optical data.

3.  A method in accordance with claim 1 or claim 2, **characterized in that** the identification of the object (5, 6) is performed by analysis of the transponder data.

4.  A method in accordance with any one of the preceding claims, **characterized in that** a barcode (3) arranged on the object (5, 6) is detected and decoded by the optical sensor (16, 17) and **in that** the object (5, 6) is identified and/or its location is determined from the decoded barcode data together with the transponder data.

5.  A method in accordance with claim 4, **characterized in that** at least some of the data stored in the transponder (2, 4) corresponds to the data encoded in the barcode (3), **in that** the transponder data detected are compared with the corresponding decoded barcode data; **in that** a correspondence is sought between the recognized partial barcode data and the detected transponder data in the event of incompletely recognized barcode data, and **in that**, if such a correspondence is found accordingly, the object (5, 6) is identified by the transponder data and its location determined is as the location of the partially decoded barcode (3).

6.  A method in accordance with claim 4 or claim 5, **characterized in that** at least some of the data stored in the transponder (2, 4) corresponds to the data encoded in the barcode (3); **in that** the transponder data detected are compared with the correspondingly decoded barcode data; and **in that** the object (5, 6) is only deemed to be successfully identified in accordance with the data in the case of a corresponding correspondence between the transponder data and the barcode data.

7.  A method in accordance with any one of the preceding claims, **characterized in that** the optical reflectance profile of the object (5, 6) is determined by the optical sensor (16, 17); **in that** the reflectance profile determined is examined for values typical for the optical forming of the transponder (2, 4) for the optical detection of the location of the transponder (2, 4); and **in that**, if the transponder (2, 4) is recognized, the location determination of the object (5, 6) is performed by evaluation of the recognized location of the transponder (2, 4) and the identification determination of the object (5, 6) by evaluation of the transponder data detected.

8.  A method in accordance with claim 7, **characterized in that**, for the recognition of the transponder (2, 4), the reflectance profile is examined for unambiguous areas of predetermined optical properties such as color, brightness, shape or the like at the object (5, 6); and **in that**, if one single corresponding area is recognized at the object (5, 6), this area is identified as the transponder (2, 4).

9.  A method in accordance with any one of the preceding claims, **characterized in that** the optical reflectance profile of the scanned object (5, 6) is determined by the optical sensor (16, 17); **in that** the reflectance profile determined is compared with a reflectance profile of the object (5, 6) bearing the transponder (2, 4) determined from the transponder data detected and stored in the transponder (2, 4); and **in that**, in the event of sufficient correspondence between the reflectance profiles, the scanned object (5, 6) is identified by the transponder data detected.

10. A method in accordance with any one of the claims 7 to 9, **characterized in that** the optical three-dimensional reflectance profile of the object (5, 6) is determined.

11. A method in accordance with any one of the preceding claims, **characterized in that** geometrical data of the object (5, 6), for example the contour and/or the length and/or the width and/or the height of the scanned object (5, 6), are determined by the optical sensor (16, 17); **in that** the geometrical data determined are compared with corresponding geometrical data of the object (5, 6) bearing the transponder (2, 4) determined from the transponder data detected and stored in the transponder (2, 4); and **in that**, in the event of sufficient correspondence between the geometrical data, the scanned object (5, 6) is identified by the transponder data detected

12. An apparatus for the identification and/or location determination of objects (5, 6) having an electromagnetic sensor unit (23), with which at least one transponder (2, 4) provided at the respective object (5, 6) can be excited to emit transponder data stored in the transponder (2, 4) and characterizing the respective object (5, 6) and with which the transponder data emitted can be detected, in particular for the performance of the method in accordance with any one of the preceding claims,
**characterized in that**,
additionally, at least one optical sensor (16, 17) is provided to scan the object (5, 6) and **in that** an evaluation unit is provided for the unambiguous identification of the object (5, 6) and for the determination of the location of the object (5, 6) from a combination of optical data which can be detected by the optical sensor (16, 17) and the emitted transponder data which can be detected.

13. An apparatus in accordance with claim 12, **characterized in that** the optical sensor is formed as a barcode detection unit (16, 17).

14. An apparatus in accordance with claim 12 or claim 13, **characterized in that** the optical sensor is formed as a reflectance detection unit.

15. An apparatus in accordance with one of claims 12, 13 or 14, **characterized in that** the optical sensor is formed as a geometrical data detection unit.

**Revendications**

1. Procédé pour identifier et pour déterminer la position d'objets (5, 6), dans lequel au moins un transpondeur (2, 4) prévu sur l'objet respectif (5, 6) est excité pour émettre des données de transpondeur mémorisées dans le transpondeur (2, 4) et caractérisant l'objet respectif (5, 6), et les données de transpondeur émises sont saisies,
**caractérisé en ce que**
l'objet (5, 6) est additionnellement palpé par au moins un détecteur optique (16, 17), et **en ce que** l'objet (5, 6) est identifié et sa position est déterminée à partir d'une combinaison des données optiques saisies par le détecteur optique (16, 17) avec les données de transpondeur saisies.

2. Procédé selon la revendication 1, **caractérisé en ce que** la détermination de position a lieu par évaluation des données optiques.

3. Procédé selon l'une des revendications 1 et 2, **caractérisé en ce que** l'identification de l'objet (5, 6) a lieu par évaluation des données de transpondeur.

4. Procédé selon l'une des revendications précédentes, **caractérisé en ce qu'**un code à barres (3) agencé sur l'objet (5, 6) est saisi par le détecteur optique (16, 17) et décodé, et **en ce que** l'objet (5, 6) est identifié et sa position est déterminée à partir des données décodées concernant le code à barres conjointement avec les données de transpondeur.

5. Procédé selon la revendication 4, **caractérisé en ce qu'**au moins une partie des données mémorisées dans le transpondeur (2, 4) correspondent aux données codées dans le code à barres (3), **en ce que** les données de transpondeur saisies sont comparées avec les données décodées correspondantes concernant le code à barres, et dans le cas où les données reconnues concernant le code à barres sont incomplètes, on recherche une coïncidence des données partielles reconnues concernant le code à barres avec les données de transpondeur saisies, et lorsque une coïncidence correspondance a été trouvée, l'objet (5, 6) est identifié par les données de transpondeur et sa position est déterminée comme étant la position du code à barres partiellement décodé (3).

6. Procédé selon la revendication 4 ou 5, **caractérisé en ce qu'**au moins une partie des données mémorisées dans le transpondeur (2, 4) correspondent aux données codées dans le code à barres (3), **en ce que** les données de transpondeur saisies sont comparées avec les données décodées correspondantes concernant le code à barres, et **en ce que** l'objet (5, 6) est considéré comme étant identifié avec succès en correspondance des données uniquement en cas de coïncidence correspondante des données de transpondeur avec les données concernant le code à barres.

**7.** Procédé selon l'une des revendications précédentes, **caractérisé en ce que** le profil de réémission optique de l'objet (5, 6) est déterminé par le détecteur optique (16, 17), **en ce que** pour saisir de manière optique la position de transpondeur (2, 4), le profil de réémission déterminé est analysé vis-à-vis de valeurs typiques pour la réalisation optique du transpondeur (2, 4), et **en ce que** lorsque le transpondeur (2, 4) est reconnu, la détermination de position de l'objet (5, 6) a lieu par évaluation de la position reconnue du transpondeur (2, 4), et la détermination d'identité de l'objet (5, 6) a lieu par évaluation des données de transpondeur 16.

**8.** Procédé selon la revendication, 7, **caractérisé en ce que** pour reconnaître le transpondeur (2, 4), on analyse le profil de réémission vis-à-vis de surfaces univoques présentant des propriétés optiques prédéterminées, par exemple la couleur, la luminosité, la forme, ou similaire, sur l'objet (5, 6), et **en ce que**, lors de la reconnaissance d'une unique surface correspondante sur l'objet (5, 6), cette surface est identifiée en tant que transpondeur (2, 4).

**9.** Procédé selon l'une des revendications précédentes, **caractérisé en ce que** l'on détermine le profil de réémission optique de l'objet palpé (5, 6) au moyen du détecteur optique (16, 17), **en ce que** le profil de réémission déterminé est comparé à un profil de réémission, déterminé à partir des données de transpondeur saisies et mémorisées dans le transpondeur (2, 4), de l'objet (5, 6) qui porte le transpondeur (2, 4), et en cas de coïncidence suffisante des profils de réémission, l'objet palpé (5, 6) est identifié par les données de transpondeur saisies.

**10.** Procédé selon l'une des revendications 7 à 9, **caractérisé en ce que** le profil de réémission tridimensionnelle optique de l'objet (5, 6) est déterminé.

**11.** Procédé selon l'une des revendications précédentes, **caractérisé en ce que** l'on détermine au moyen du détecteur optique (16, 17) des données géométriques de l'objet (5, 6), par exemple le contour et/ou la longueur et/ou la largeur et/ou la hauteur de l'objet palpé (5, 6), **en ce que** les données géométriques déterminées sont comparées à des données géométriques correspondantes, de l'objet (5, 6) qui porte le transpondeur (2, 4), déterminées à partir des données de transpondeur saisies et mémorisées dans le transpondeur (2, 4), et lors d'une coïncidence suffisante des données géométriques, l'objet palpé (5, 6) est identifié par les données de transpondeur saisies.

**12.** Appareil pour identifier et pour déterminer la position d'objets (5, 6), comprenant une unité détectrice électromagnétique (23) au moyen de laquelle au moins un transpondeur (2, 4) prévu sur l'objet respectif (5, 6) peut être excité pour émettre des données de transpondeur mémorisées dans le transpondeur (2, 4) et caractérisant l'objet respectif (5, 6), et les données de transpondeur émises peuvent être saisies, en particulier pour mettre en oeuvre le procédé selon l'une des revendications précédentes,
**caractérisé en ce qu'**il est prévu en supplément au moins un détecteur optique (16, 17) pour palper l'objet (5, 6), et **en ce qu'**il est prévu une unité d'évaluation pour l'identification univoque de l'objet (5, 6) et pour déterminer la position de l'objet (5, 6) à partir d'une combinaison de données optiques susceptibles d'être saisies par le détecteur optique (16, 17) avec les données de transpondeur émises et susceptibles d'être saisies.

**13.** Appareil selon la revendication 12, **caractérisé en ce que** le détecteur optique est réalisé sous forme d'unité de détection de code à barres (16,17).

**14.** Appareil selon l'une des revendications 12 ou 13, **caractérisé en ce que** le détecteur optique est réalisé sous forme d'unité de détection de réémission.

**15.** Appareil selon la revendication 12, 13 ou 14, **caractérisé en ce que** le détecteur optique est réalisé sous forme d'unité de détection de données géométriques.

## Fig. 1

## Fig. 2

$\alpha$, bei $\beta = \gamma = 0$